# EUROPÄISCHE PATENTSCHRIFT

(11) **EP 1 399 329 B1**
(45) Veröffentlichungstag und Bekanntmachung des Hinweises auf die Patenterteilung: **05.10.2005**
(21) Anmeldenummer: 02747184.6
(22) Anmeldetag: 31.05.2002
(51) Int. Cl.: B60K 41/00, B60K 6/04

(54) **VERFAHREN UND EINRICHTUNG ZUR ANSTEUERUNG EINES HYBRIDFAHRZEUGES**
METHOD AND DEVICE FOR CONTROL OF A HYBRID VEHICLE
PROCEDE ET INSTALLATION DE COMMANDE D'UN VEHICULE HYBRIDE

(30) Priorität: 13.06.2001 DE 10128758
(43) Veröffentlichungstag der Anmeldung: 24.03.2004
(73) Patentinhaber: ROBERT BOSCH GMBH, 70442 Stuttgart (DE)
(72) Erfinder: FAYE, Ian, 70192 Stuttgart (DE)
(86) Internationale Anmeldenummer: PCT/DE2002/001985
(87) Internationale Veröffentlichungsnummer: WO 2002/100675

(56) Entgegenhaltungen:
- DE-A- 10 005 581
- DE-A- 10 035 027
- US-A- 5 815 824
- US-B1- 6 230 496

## Beschreibung

Die Erfindung bezieht sich auf ein Verfahren zu Ansteuerung eines Hybridfahrzeugs, bei dem der Antrieb nach Vorgabe einer Betriebssteuerung mittels eines Verbrennungsmotors und/oder eines Elektromotors erfolgt, wobei der Anteil des elektromotorischen Antriebs in Abhängigkeit von die Fahrstrecke betreffenden, der Betriebssteuerung mitgeteilten Daten unter Berücksichtigung eines Ladezustandes eines Energiespeichers für elektrische Energie gesteuert wird sowie auf ein Hybridfahrzeug mit einer Einrichtung zur Durchführung eines solchen Verfahrens.

Ein Verfahren dieser Art ist in der DE 198 07 291 A1 angegeben. Bei diesem bekannten Verfahren zum Betreiben eines Kraftfahrzeugs mit einem Hybridantrieb werden zum Beispiel mit einem Navigationssystem erfasste momentane Positionsdaten des Kraftfahrzeugs mit gespeicherten Daten einer Straßenkarte verglichen, um in Abhängigkeit der Verkehrsumgebung den Anteil des elektromotorischen Antriebs zu steuern. Hierbei wird ein Ladezustand einer Batterie des Hybridantriebs ständig überwacht. Insbesondere betreffen die Informationen zur Verkehrsumgebung die Unterscheidung zwischen einer Fahrt in einer Stadt oder über Land und auch Angaben zur Entfernung einer Elektrotankstelle.

Auch aus der US-PS 5 892 346 geht ein Hybridfahrzeug hervor, bei dem zur Steuerung des Anteils des elektromotorischen Antriebs von einem Navigationssystem gelieferte Ortsdaten einbezogen werden.

Aus der DE 100 05 581 A1 ist ein Verfahren zum Steuern eines Hybridfahrzeugs bekannt geworden, bei dem der elektromotorische Antrieb und der Ladezustand der Antriebsbatterien in Abhängigkeit von der geografischen Höhe gesteuert werden. Durch die Einbeziehung des Höhenprofils können die Ladung und die Entladung der Antriebsbatterien derart festgelegt werden, dass einerseits stets ein Mindestladezustand erhalten bleibt und dass jederzeit eine Speicherkapazität für eine Energierückgewinnung zur Verfügung steht. Im Ergebnis kann verhindert werden, dass sich der Fahrkomfort weder durch einen Überschuss noch durch einen Mangel regenerativer Systemenergie verschlechtert. In Kauf genommen werden muss eine Belastung der elektrischen Antriebsbatterie durch tiefe Entladungszyklen.

Der Erfindung liegt die Aufgabe zugrunde, ein Verfahren und ein Hybridfahrzeug zur Durchführung des Verfahrens der zuvor genannten Art bereitzustellen, mit denen eine bessere Nutzung insbesondere der elektrischen Energie erreicht wird.

Diese Aufgabe wird bei dem Verfahren mit den Merkmalen des Anspruchs 1 und bei dem Hybridfahrzeug mit den Merkmalen des Anspruchs 9 gelöst.

Hiernach ist vorgesehen, dass die Daten Höheninformationen umfassen, die zur Steuerung des Anteils des elektromotorischen Antriebs zugrundegelegt werden, wobei ein in der Betriebssteuerung vorgegebener oder vorgebbarer Mindestladezustand des Energiespeichers, bei dem notwendige Fahrzeuggrundfunktionen noch gewährleistet sind, nicht unterschritten wird. Bei dem Hybridfahrzeug erfolgt die Lösung mit den Maßnahmen, dass die Einrichtung eine Einheit zum Gewinnen von Höheninformationen aufweist, dass in der Betriebssteurung eine Auswerteeinheit zum Auswerten ihr zugeführter Daten der Höheninformationen und ein Steuerungsteil zum Steuern des Anteils des elektromotorischen Antriebs auf der Grundlage der Höheninformationen vorgesehen sind.

Das erfindungsgemäße Steuerungskonzept für flache Gegenden sieht von dass in der Betriebssteuerung eine Höhenschwelle eingestellt wird, bei deren Unterschreitung der Anteil des elektromotorischen Antriebs entsprechend einem Normalbetrieb mit einem vorgegebenen oder vorgebbaren normalen Mindestladezustand und bei dessen Überschreitung der Anteil des elektromagnetischen Antriebs entsprechend dem Mindestladezustand erfolgt, der unter dem normalen Mindestladezustand liegt.

Die Steuerung auf der Grundlage der Höheninformationen ergibt den Vorteil dass ein niedrigerer Mindestladezustand genutzt, d. h. dem Energiespeicher mehr Energie für den elektromotorischen Antrieb entnommen werden kann, da bei der anschließenden Abfahrt eine kalkulierbare Energierückgewinnung zum Wiederaufladen des Energiespeichers mittels des als Generator wirkenden Elektromotors ermöglicht wird. Bei der Höheninformation kann die zu erwartende Höhe berücksichtigt werden. Das Entladen und Aufladen der Batterie kann optimal auf die Höhentopografie abgestimmt werden, wodurch Vorteile im Verbrauch erzielt werden. Ein weiterer Vorteil ist, dass der Elektromotor des Parallel-Hybridfahrzeugs stärker bei den Bergauffahrten eingesetzt und damit eine verbesserte Drehmomentcharakteristik erreicht werden kann.

Eine relativ genaue Regelung des Anteils des elektromotorischen Antriebs bzw. der Entlade- und Ladevorgänge des Energiespeichers wird dadurch ermöglicht, dass die Höheninformationen die größte Höhe der Fahrstrecke oder einer Teilstrecke sowie die aktuelle Höhe des Fahrzeugs beinhalten.

Ein günstiger Aufbau und Steuerungsablauf werden dadurch erreicht, dass die Höheninformationen aus Daten eines Navigationssystems oder eines anderen vorausschauenden Systems geeignet ist, z.B. GPS, erhalten werden.

Eine vorteilhafte Vorgehensweise besteht darin, dass bei Eingabe eines Zielortes in das Navigationssystm ein Höhenprofil der Fahrstrecke bis zum Zielort erstellt und die Höhenprofildaten zur Steuerung des Anteils des elektromotorischen Antriebs in der Weise herangezogen werden, dass bei Erreichen der größten Höhe einer Teilstrecke und/oder der Gesamtstrecke der Mindestladezustand nicht unterschritten wird.

Ein niedriger Verbrauch wird dadurch unterstützt, dass bei Gefällstrecken zumindest abschnittsweise der elektrische Antrieb als mittels der Fahrzeugräder angetriebener Generator zum Einspeisen eines Ladestroms in den Energiespeicher betrieben wird und dass der Einspeise-Ladestrom bei der Steuerung des Anteils des elektromotorischen Antriebs an Steigungsstrecken im voraus einbezogen wird.

Eine alternative günstige Vorgehensweise besteht darin, dass bei fehlender Zieleingabe in das im Hintergrund mitlaufende Navigationssystem dieses eine vom Fahrer gewählte Fahrstrecke erkennt und Höhenprofildaten dieser Fahrstrecke liefert, die der Betriebssteuerung zugeführt werden, und dass der Anteil des elektro-motorischen Antriebs unter Berücksichtigung der nächstfolgenden größten Höhe und/oder der größten Höhe des Gesamtprofils der Fahrstrecke gesteuert wird.

Auch ohne Navigationssystem oder bei Vorhandensein eines Navigationssystems, das keine Höheninformationen liefern kann, besteht eine vorteilhafte Ausgestaltung darin, dass die Höheninformation aus einem im voraus in der Betriebssteuerung abgespeicherten Informationsanteil einschließlich einer größten Höhe mindestens einer Teilstrecke und/oder einer Gesamtstrecke und einem mittels eines Höhenmessers erfassten aktuellen Informationsanteil besteht, dass die aus dem aktuellen Informationsanteil gewonnene aktuelle Höhe mit dem abgespeicherten Informationsanteil verglichen wird und dass auf der Grundlage des Vergleichsergebnisses der Anteil des elektromagnetischen Antriebs gesteuert wird.

Eine verfeinerte Steuerung bzw. Regelung des Antriebs wird dadurch ermöglicht, dass der Mindestladezustand in der Betriebssteuerung in Abhängigkeit einer Außentemperatur, einer Tageszeit, des (allgemeinen) Batteriezustandes oder des Fahrverhaltens oder einer Kombination aus mindestens zweien dieser Parameter adaptiv ermittelt wird.

Die Erfindung wird nachfolgend anhand von Ausführungsbeispielen unter Bezugnahme auf die Zeichnungen näher erläutert. Es zeigen:
- Fig. 1: ein Blockdiagramm zum Aufbau einer Steuerungseinrichtung für einen Hybridmotor,
- Fig. 2: verschiedene Batterieladezustände und Leistungsansprüche eines Elektromotors in Bezug auf ein Höhenprofil und
- Fig. 3: ein Ablaufdiagramm für ein Verfahren zur Ansteuerung eines Hybridfahrzeugs.

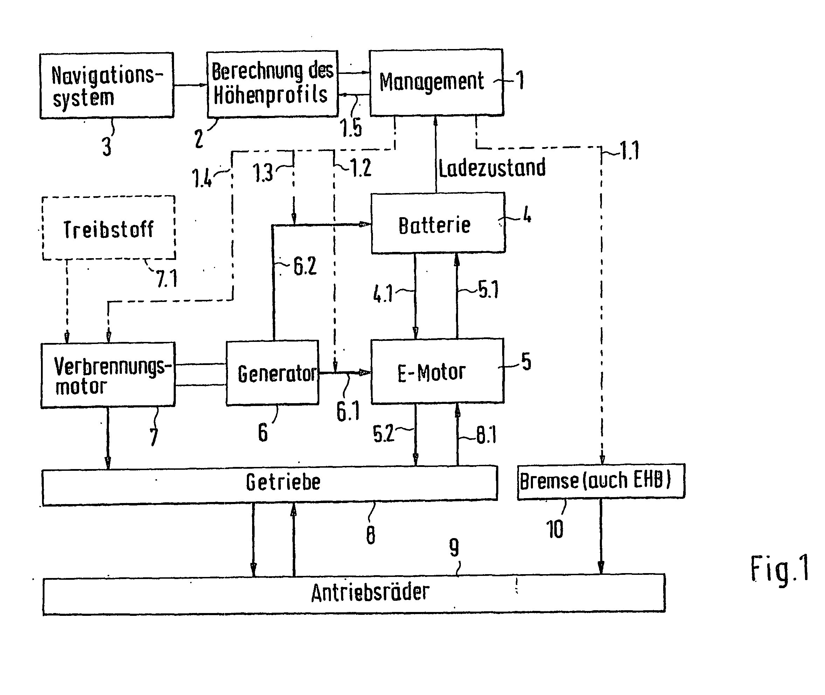

Die in Fig. 1 gezeigte Einrichtung zur Steuerung bzw. Regelung eines Parallel-Hybridfahrzeugs umfasst eine Betriebssteuerung 1, der von einem Navigationssystem 3 aus über eine Berechnungseinheit 2 zur Berechnung eins Höhenprofils Höheninformationen zugeführt werden, einen von einem Treibstofftank 7.1 versorgten und einen Generator 6 antreibenden Verbrennungsmotor 7, einen von dem Generator 6 und einem Energiespeicher in Form einer Batterie 4 versorgten Elektromotor 5, ein von dem Verbrennungsmotor 7 und/oder dem Elektromotor 5 angetriebenes Getriebe 8, Antriebsräder 9 und eine mit diesen zusammen wirkende, insbesondere elektro-hydraulisch arbeitende Bremse 10. Die Betriebssteuerung 1 kann; z.B. zusammen mit der Berechnungseinheit 2 und dem Navigationssystem 3, in einem gemeinsamen Steuergerät, z.B. auch dem Navigationgssystem 3 selbst oder in einem Fahrzeugrechner abgebildet sein.

Dem Elektromotor 5 wird elektrische Energie für den durch ihn bewirkten elektromotorischen Antrieb über eine Motorspeisung 4.1 von der Batterie und/oder über eine Energieeinspeisung 6.1 von dem Generator 6 zum Erzeugen der auf das Getriebe 8 wirkenden mechanischen Antriebsenergie 5.2 zugeführt. Umgekehrt kann der Elektromotor 5 zur Energierückgewinnung beispielsweise bei Bremsvorgängen bzw. an einer Gefällstrecke als Generator betrieben werden, wobei ihm von den Antriebsrädern 9 über das Getriebe 8 Bewegungsenergie über eine Rückspeisung 8.1 zugeführt wird. Ein entstehender Ladestrom 5.1 wird zum Aufladen der Batterie 4 genutzt. Ferner kann die Batterie 4 mit dem Generator 6 auch über eine Batteriespeisung 6.2 geladen werden.

Die Betriebssteuerung 1 steuert den Anteil des elektromotorischen Antriebs bzw. des Verbrennungsmotors über eine Elektromotorsteurung 1.2 bzw. eine Verbrennungsmotorsteuerung 1.4 nach vorgegebenen Programmen, wobei die ihr über einen Datenaustausch 1.5 mitgeteilten Höheninformationen eingerechnet werden. Auch eine Bremssteuerung 1.1 sowie eine Ladesteuerung 1.3 der Batterie 4 werden von der Betriebssteuerung 1 bewirkt. Auch der Ladezustand der Batterie 4 wird der Betriebssteuerung 1 mitgeteilt.

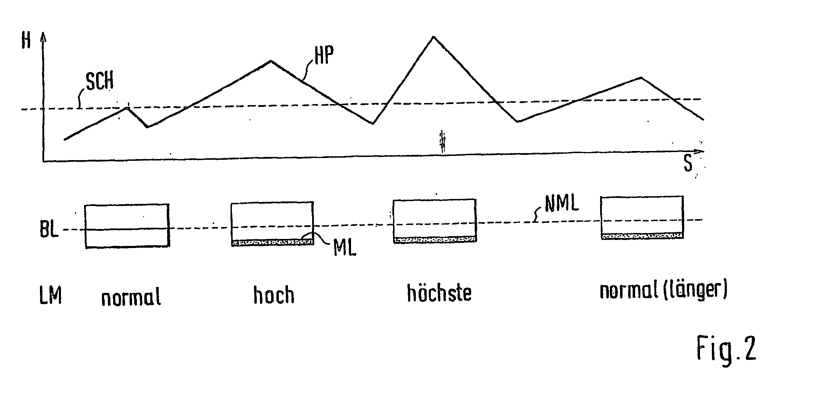

Wie in Fig. 2 gezeigt, kann aus den Daten des Navigationssystems 3 mittels der Berechnungseinheit 2 ein Höhenprofil HP über den Weg s bestimmt werden. Bei einer gewissen Höhe kann dabei in der Betriebssteuerung 1 eine Höhenschwelle SCH vorgegeben werden, um unterhalb derselben eine Steuerung entsprechend einem Normalbetrieb und oberhalb derselben eine Steuerung unter Zugrundelegung der Höheninformationen durchzuführen. Der Batterieladezustand BL richtet sich dabei hinsichtlich seines Mindestladezustandes ML, der nicht unterschritten wird und ausreichend ist, um die elektrischen Grundfunktionen des Fahrzeugs sicherzustellen, einerseits nach der Schwelle SCH und andererseits nach dem Höhenprofil HP, wobei zudem der allgemeine Zustand der Batterie berücksichtigt werden kann. Auch eine Regeltoleranz (Zieltoleranz) kann abhängig von dem Zustand der Batterie gewählt werden. Wird die Höhe des Höhenprofils HP unterhalb der Schwelle SCH, so wird ein normaler Mindestladezustand NML in der normalen Betriebssteuerung 1 zugrundegelegt, die nicht unterschritten wird, d.h. der Anteil des elektromotorischen Antriebs wird entsprechend gesteuert. Liegt hingegen die Höhe H oberhalb der Schwelle SCH, so wird bei einer Steigung der Anteil des elektromotorischen Antriebs, d.h. der Leistungsanspruch LM an den Elektromotor 5 mittels der Betriebssteuerung 1 erhöht, wobei ein Mindestladezustand ML der Batterie 4 zugrundegelegt wird, der unterhalb des normalen Mindestladezustands NML liegt, da davon ausgegangen wird, dass anschließend eine Abfahrt über eine gewisse Gefällstrecke erfolgt, über die wiederum Ladeenergie für die Batterie 4 zurückgewonnen werden kann. Hierdurch kann eine erhöhte Leistung des Hybridantriebs bei möglichst geringem Verbrauch des Verbrennungsmotors 7 bereitgestellt werden. Dabei kann der Leistungsanspruch an den Elektromotor 5 in Abhängigkeit von der Steilheit, der Höhe, der Lange und/oder dem anschließenden Gefälle bestimmt werden.

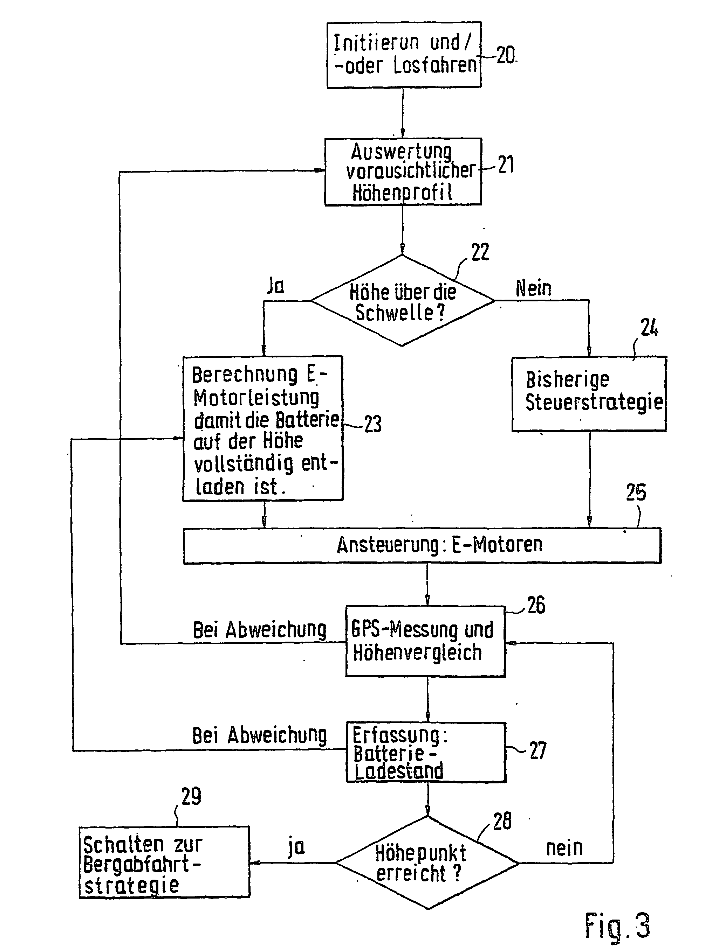

Ein Beispiel für einen Verfahrensablauf ist in Fig. 3 gezeigt, wobei Verfahrensschritte 20 bis 29 näher angegeben sind. Zunächst wird in einem Schritt 20 mittels der Betriebssteuerung 1 das System initiiert bzw. die Fahrt begonnen. Hierbei kann beispielsweise ein Zielort in dem Navigationssystem 3 angegeben werden oder dieses kann im Hintergrund mitlaufen. In einem Schritt 21 wird ein voraussichtliches Höhenprofil ausgewertet, das bei Änderung einer zunächst eingeschlagenen Fahrstrecke auch aktualisiert werden kann. In einem anschließenden Schritt 22 wird überprüft, ob die Höhe H über der Schwelle SCH liegt oder nicht. Ist die Schwelle überschritten, wird in einem Schritt 23 der Anteil der elektromotorischen Steuerung in der Weise berechnet, dass bei Erreichen der größten Höhe H einer Teilstrecke oder aber einer Gesamtstrecke der Mindestladezustand ML in etwa erreicht wird. Entsprechend erfolgt die Ansteuerung des Elektromotors 5. Ist die Schwelle SCH unterschritten, so wird eine bisherige normale Steuerstrategie in einem Schritt 24 beibehalten, und die Entladung der Batterie 4 unterschreitet nicht den normalen Mindestladezustand NML. Entsprechend wird der Anteil des elektromotorischen Antriebs gesteuert. In einem Schritt 26 wird dann ein Höhenvergleich der Messung mit dem Navigationssystem durchgeführt und bei Abweichung erfolgt ein Rücksprung zu dem Schritt 21 mit einer neuen Auswertung des voraussichtlichen Höhenprofils. Liegt keine Abweichung vor, wird in einem Schritt 27 der Batterieladezustand erfasst und überprüft. Liegt dabei eine Abweichung vor, so wird auf Schritt 23 zurückgesprungen und die Leistung des Elektromotors 5 neu berechnet. Liegt keine Abweichung des Batterieladezustands vor, so wird überprüft, ob die größte Höhe erreicht ist und gegebenenfalls in einem anschließenden Schritt 29 auf eine Bergabfahrtstrategie umgeschaltet, bei der eine geeignete Energierückgewinnung zum Beispiel unter Einbeziehung der Bremssteuerung 10 gewählt wird. Ist die größte Höhe noch nicht erreicht, so erfolgt ein Rücksprung zum Schritt 26 und der entsprechende Verfahrensablauf wird wiederholt.

Die Steuerung mittels der Betriebssteuerung 1 kann auch in der Weise erfolgen, dass ohne Zugrundelegung einer Höhenschwelle SCH eine Steuerung mit den Höheninformationen erfolgt, wobei der Mindestladezustand ML für die gesamte Fahrstrecke zugrunde gelegt wird.

Der Mindestladezustand ML braucht in der Betriebssteurung 1 nicht fest vorgegeben zu sein, sondern er kann auch in Abhängigkeit von äußeren Parametern adaptiv zum Beispiel in Abhängigkeit einer Außentemperatur, der Tageszeit, dem allgemeinen Batteriezustand oder dem Fahrverhalten gewählt werden, da zum Beispiel bei niedrigerer Außentemperatur eine höhere elektrische Energie der Batterie 4 zum Gewährleisten der Grundfunktionen zur Verfügung gestellt werden muss. In Abhängigkeit von der Tageszeit oder den Lichtverhältnissen kann sich ebenfalls ein unterschiedlicher Energiebedarf ergeben, dem Rechnung getragen wird. Aufgrund des Fahrverhal-tens kann der Leistungsbedarf oder die Energierückgewinnung gegenüber einem Durchschnittsverhalten unterschiedlich sein. Auch kann der Mindestladezustand ML in Abhängigkeit von der größten Höhe einer Teilstrecke oder der Gesamtstrecke abhängig gemacht werden. Dabei kann sich die Steuerungs- oder Regelungsstrategie jeweils danach richten, ob ein Ziel in das Navigationssystem 3 eingegeben ist oder dieses im Hintergrund mitläuft. Für den Mindestladezustand ML und den normalen Mindestladezustand NML können auch Toleranzbänder zugelassen werden.

Ist in dem Hybridfahrzeug kein Navigationssystem oder kein mit der Möglichkeit, Höheninformationen bereitzustellen, versehenes Informationssystem vorhanden, so kann die Betriebssteuerung 1 derart ausgebildet sein, dass sie im Voraus, zum Beispiel manuell oder von einem Datenspeicher aus mit Höheninformationen zu einer geplanten Fahrstrecke geladen werden kann und während der Fahrt in Verbindung mit einem Höhenmesser aktuelle Höhendaten aufnehmen kann. In einer Auswerteeinheit können die Höheninformationen und Höhendaten dann ähnlich wie bei dem vorhergehenden Ausführungsbeispiel zum Steuern des Anteils des elektromotorischen Antriebs verrechnet werden. Auch hierbei können verschiedene Steuerstrategien mit entsprechenden Programmen angewendet werden, die dann mittels eines Steuerteils der Betriebssteuerung 1 zur Steuerung verwendet werden.

## Patentansprüche

1. Verfahren zur Ansteuerung eines Hybridfahrzeugs,
- bei dem der Antrieb nach Vorgabe einer Betriebssteuerung (1) mittels eines Verbrennungsmotors (7) und eines Elektromotors (5) erfolgt,
- bei dem der Anteil des elektromotorischen Antriebs in Abhängigkeit von die Fahrstrecke betreffenden und der Betriebssteuerung mitgeteilten Daten unter Berücksichtigung eines Ladezustandes eines Energiespeichers (4) für elektrische Energie gesteuert wird,
- bei dem die Daten Höheninformationen umfassen, die zur Steuerung des Anteils des elektromotorischen Antriebs zugrunde gelegt werden,
- bei dem in der Betriebssteuerung ein Mindestladezustand (ML) des Energiespeichers vorgegeben wird, bei dem notwendige Fahrzeuggrundfunktionen noch gewährleistet sind,
- bei dem in der Betriebssteuerung ein normaler Mindestladezustand (NML) vorgegeben wird, bei dem normaler Betrieb noch gewährleistet ist, und
- wobei der Mindestladezustand (ML) des Energiespeichers unterhalb des normalen Mindestladezustand (NML) liegt,
**dadurch gekennzeichnet, daß**
- in der Betriebssteuerung (1) eine Höhenschwelle eingestellt wird,
-- bei deren Unterschreitung der Anteil des elektromotorischen Antriebs entsprechend dem normalen Betrieb vorgegeben wird, bei dem der normale Mindestladezustand (NML) des Energiespeichers (4) nicht unterschritten wird,
und
-- bei deren Überschreitung der Anteil des elektromotorischen Antriebs entsprechend einem Betrieb vorgegeben wird, bei dem der normale Mindestladezustand (NML) bis zum Mindestladezustand (ML) des Energiespeichers (4) unterschritten werden kann.

2. Verfahren nach Anspruch 1,
**dadurch gekennzeichnet,**
**dass** die Höheninformationen die größte Höhe der Fahrstrecke oder einer Teilstrecke sowie die aktuelle Höhe des Fahrzeugs beinhalten.

3. Verfahren nach Anspruch 1 oder 2,
**dadurch gekennzeichnet,**
**dass** die Höheninformationen aus Daten eines Navigationssystems (3) oder eines anderen vorausschauenden Systems erhalten werden.

4. Verfahren nach einem der vorhergehenden Ansprüche,
**dadurch gekennzeichnet,**
**dass** bei Eingabe eines Zielortes in das Navigationssystm (3) ein Höhenprofil der Fahrstrecke bis zum Zielort erstellt und die Höhenprofildaten zur Steuerung des Anteils des elektromotorischen Antriebs in der Weise herangezogen werden, dass bei Erreichen der größten Höhe einer Teilstrecke und/oder der Gesamtstrecke der Mindestladezustand (ML) nicht unterschritten wird.

5. Verfahren nach Anspruch 4,
**dadurch gekennzeichnet,**
**dass** bei Gefällstrecken zumindest abschnittsweise der elektrische Antrieb (5) als mittels der Fahrzeugräder angetriebener Generator zum Einspeisen eines Ladestroms (5.1) in den Energiespeicher (4) betrieben wird und
**dass** der Einspeise-Ladestrom (5.1) bei der Steuerung des Anteils des elektromotorischen Antriebs an Steigungsstrecken im voraus einbezogen wird.

6. Verfahren nach einem der Ansprüche 1 bis 3,
**dadurch gekennzeichnet,**
**dass** bei fehlender Zieleingabe in das im Hintergrund mitlaufende Navigationssystem (3) dieses eine gewählte Fahrstrecke erkennt und Höhenprofildaten dieser Fahrstrecke liefert, die der Betriebssteuerung (1) zugeführt werden, und
**dass** der Anteil des elektromotorischen Antriebs unter Berücksichtigung der nächstfolgenden größten Höhe und/oder der größten Höhe des Gesamtprofils der Fahrstrecke gesteuert wird.

7. Verfahren nach Anspruch 1 oder 2,
**dadurch gekennzeichnet,**
**dass** die Höheninformation aus einem im voraus in der Betriebssteuerung abgespeicherten Informationsanteil einschließlich einer größten Höhe mindestens einer Teilstrecke und/oder einer Gesamtstrecke und einem mittels eines Höhenmessers erfassten aktuellen Informationsanteil besteht,
**dass** die aus dem aktuellen Informationsanteil gewonnene aktuelle Höhe mit dem abgespeicherten Informationsanteil verglichen wird und
**dass** auf der Grundlage des Vergleichsergebnisses der Anteil des elektromechanischen Antriebs gesteuert wird.

8. Verfahren nach einem der vorhergehenden Ansprüche,
**dadurch gekennzeichnet,**
**dass** der Mindestladezustand (ML) in der Betriebssteuerung (1) in Abhängigkeit einer Außentemperatur, einer Tageszeit, des Batteriezustandes oder des Fahrverhaltens oder einer Kombination aus mindestens zweien dieser Parameter adaptiv ermittelt wird.

9. Hybridfahrzeug mit einem Verbrennungsmotor (7) und einem von einem Energiespeicher (4) elektrisch versorgten Elektromotor (5) sowie einer Einrichtung zur Durchführung des Verfahrens nach einem der vorhergehenden Ansprüche, die eine Betriebssteuerung (1) zum Steuern des Anteils des elektromotorischen Antriebs aufweist,
**dadurch gekennzeichnet,**
**dass** die Einrichtung eine Einheit zum Gewinnen von Höheninformationen aufweist,
**dass** in der Betriebssteurung (1) eine Auswerteeinheit zum Auswerten ihr zugeführter Daten der Höheninformationen und ein Steuerungsteil zum Steuern des Anteils des elektromotorischen Antriebs auf der Grundlage der Höheninformationen vorgesehen sind.

## Claims

1. Method for controlling a hybrid vehicle,
- in which the drive is provided as predetermined by an operation controller (1) by means of an internal combustion engine (7) and an electric motor (5),
- in which the proportion of the electric motor drive is controlled as a function of data which relates to the route and is signalled to the operation controller, taking into account the state of charge of an energy store (4) for electrical energy,
- in which the data includes height information which is used as the basis for controlling the proportion of the electric motor drive,
- in which a minimum state of charge (ML) for the energy store is predetermined in the operation controller, at which basic necessary vehicle functions are still ensured,
- in which a normal minimum state of charge (NML) is predetermined in the operation controller, at which normal operation is still ensured, and
- with the minimum state of charge (ML) of the energy store being below the normal minimum state of charge (NML),
**characterized in that**
- a height threshold is set in the operation controller (1)
-- whose overshooting results in the proportion of the electric-motor drive being predetermined on the basis of normal operation during which the normal minimum state of charge (NML) of the energy store (4) is not undershot,
and
-- whose overshooting results in the proportion of the electric motor drive being predetermined on the basis of operation during which the normal minimum state of charge (NML) cannot be undershot until the minimum state of charge (ML) of the energy store (4) is reached.

2. Method according to Claim 1,
**characterized**
**in that** the height information includes the highest point of the route or a route section, as well as the current height of the vehicle.

3. Method according to Claim 1 or 2,
**characterized**
**in that** the height information is obtained from data from a navigation system (3) or from some other predictive system.

4. Method according to one of the preceding claims,
**characterized**
**in that**, when a destination location is entered in the navigation system (3), a height profile of the route to the destination location is produced, and the height profile data is used to control the proportion of the electric-motor drive in such a way that, on reaching the highest point of a route section, and/or on the entire route, the minimum state of charge (ML) is not undershot.

5. Method according to Claim 4,
**characterized**
**in that**, on descending routes, the electrical drive (5) is operated, at least in places, as a generator which is driven by means of the vehicle wheels in order to feed a charging current (5.1) into the energy store (4), and
**in that** the feed charging current (5.1) is used in advance in the control of the proportion of the electric-motor drive on climbing routes.

6. Method according to one of Claims 1 to 3,
**characterized**
**in that**, if no destination is entered in the navigation system (3) which is running in the background, this navigation system (3) identifies a selected route and produces height profile data for this route, which is supplied to the operation controller (1), and
**in that** the proportion of the electric-motor drive is controlled taking into account the next-subsequent greatest height and/or the greatest height in the overall profile of the route.

7. Method according to Claim 1 or 2,
**characterized**
**in that** the height information comprises an information component which is stored in the operation controller in advance, including a maximum height on at least one route section and/or on an entire route, and a current information component which is recorded by means of an altimeter,
**in that** the current height which is obtained from the current information component is compared with the stored information component, and
**in that** the proportion of the electromechanical drive is controlled on the basis of the comparison result.

8. Method according to one of the preceding claims,
**characterized**
**in that** the minimum state of charge (ML) is determined adaptively in the operation controller (1) as a function of the outside temperature, the time of day, the battery state or the driving behaviour, or a combination of at least two of these parameters.

9. Hybrid vehicle having an internal combustion engine (7) and having an electric motor (5) which is supplied with electricity from an energy store (4), and having a device for carrying out the method according to one of the preceding claims, which device has an operation controller (1) for controlling the proportion of the electric-motor drive,
**characterized**
**in that** the device has a unit for obtaining height information,
**in that** an evaluation unit for evaluation of height information data supplied to it and a control section for controlling the proportion of the electric-motor drive on the basis of the height information are provided in the operation controller (1).

## Revendications

1. Procédé pour commander un véhicule hybride, selon lequel
- l'entraînement se fait par une donnée prédéfinie d'une commande de fonctionnement (1) à l'aide d'un moteur à combustion interne (7) et d'un moteur électrique (5),
- en tenant compte d'un état de charge d'un accumulateur d'énergie (4) pour l'énergie électrique, la part de l'entraînement par moteur électrique est commandée en fonction de données concernant le trajet et fournies à la commande de fonctionnement,
- les données comprennent des informations d'altitude qui servent de base pour commander la part de l'entraînement par moteur électrique,
- dans la commande de fonctionnement est spécifié un état de charge minimale (ML) - de l'accumulateur d'énergie - qui assure encore les fonctions de base nécessaires au véhicule,
- dans la commande de fonctionnement est spécifié un état de charge minimale normal (NML) qui permet d'assurer le fonctionnement,
- l'état de charge minimale (ML) de l'accumulateur d'énergie étant inférieur à l'état de charge minimale normal (NML),
**caractérisé en ce qu'**
- on règle dans la commande de fonctionnement (1) un seuil d'altitude,
- lorsqu'il n'est pas atteint, la part de l'entraînement par moteur électrique est spécifiée d'après le fonctionnement normal dans lequel l'état de charge minimale normal (NML) de l'accumulateur d'énergie (4) ne passe pas au-dessous de la limite inférieure, et
- lorsqu'il est dépassé, la part de l'entraînement par moteur électrique est spécifiée d'après un fonctionnement dans lequel l'état de charge minimale normal (NML) peut passer au-dessous de la limite inférieure jusqu'à ce que l'état de charge minimale (ML) de l'accumulateur d'énergie (4) soit atteint.

2. Procédé selon la revendication 1,
**caractérisé en ce que**
les informations d'altitude comprennent l'altitude maximale du trajet ou d'un trajet partiel ainsi que l'altitude effective du véhicule.

3. Procédé selon la revendication 1 ou 2,
**caractérisé en ce que**
les informations d'altitude sont obtenues à partir des données d'un système de navigation (3) ou d'un autre système de prédiction.

4. Procédé selon l'une des revendications précédentes,
**caractérisé en ce que**
lorsqu'on donne au système de navigation (3) une destination, un profil d'altitude du trajet est établi jusqu'à la destination et les données du profil d'altitude sont utilisées pour commander la part de l'entraînement par moteur électrique de telle manière que l'état de charge minimale (ML) ne passe pas au-dessous de l'état minimal lorsque l'altitude maximale est atteinte sur un trajet partiel et/ou le trajet complet.

5. Procédé selon la revendication 4,
**caractérisé en ce que**
sur des trajets en pente descendante, l'entraînement électrique (5) fonctionne au moins par moments comme un générateur entraîné à l'aide des roues du véhicule et destiné à fournir un courant de charge (5.1) à l'accumulateur d'énergie (4), et
le courant de charge (5.1) fourni est pris en compte par anticipation lorsque la part de l'entraînement par moteur électrique est commandée sur des trajets en pente montante.

6. Procédé selon l'une des revendications 1 à 3,
**caractérisé en ce que**
si la destination n'est pas fournie au système de navigation (3) qui fonctionne en arrière-plan, le système de navigation reconnaît un trajet choisi et donne pour ce trajet des données de profil d'altitude qui sont acheminées à la commande de fonctionnement (1), et
la part de l'entraînement par moteur électrique est commandée en tenant compte de l'altitude maximale ultérieure et/ou de l'altitude maximale sur le profil complet du trajet.

7. Procédé selon la revendication 1 ou 2,
**caractérisé en ce que**
les informations d'altitude consistent en une part d'informations mémorisée préalablement dans la commande de fonctionnement, y compris une altitude maximale d'au moins un trajet partiel et/ou un trajet complet, et en une part d'informations effective détectées à l'aide d'un altimètre,
l'altitude effective obtenue à partir de la part d'informations effective est comparée à la part d'informations mémorisée et
la part de l'entraînement électromécanique est commandée sur la base du résultat de comparaison.

8. Procédé selon l'une des revendications précédentes,
**caractérisé en ce que**
dans la commande de fonctionnement (1), l'état de charge minimale (ML) est déterminé par adaptation en fonction d'une température extérieure, du moment de la journée, de l'état de la batterie ou du comportement de conduite ou en fonction d'une combinaison d'au moins deux de ces paramètres.

9. Véhicule hybride équipé d'un moteur à combustion interne (7) et d'un moteur électrique (5) alimenté en électricité par un accumulateur d'énergie (4), ainsi que d'une installation destinée à exécuter le procédé selon l'une des revendications précédentes et munie d'une commande de fonctionnement (1) pour commander la part de l'entraînement par moteur électrique,
**caractérisé en ce que**
l'installation comporte une unité pour obtenir des informations d'altitude,
dans la commande de fonctionnement (1) une unité d'exploitation est prévue pour exploiter les données des informations d'altitude qui lui sont fournies et une partie de commande pour commander la part de l'entraînement par moteur électrique en fonction des informations d'altitude.
